# EUROPEAN PATENT SPECIFICATION

(11) **EP 2 515 678 B1**
(45) Date of publication and mention of the grant of the patent: **14.08.2013**
(21) Application number: 10790735.4
(22) Date of filing: 07.12.2010
(51) Int. Cl.: A23K 1/18, A23L 1/325, A23L 1/00, A23L 1/05, A23J 3/22

(54) **METHOD FOR PRODUCING AN ANIMAL FEED OR FOODSTUFF AND A PRODUCT OBTAINED BY THAT METHOD**
VERFAHREN ZUR HERSTELLUNG EINES HAUSTIERFUTTERMITTELS ODER EINES LEBENSMITTELS UND DADURCH HERGESTELLTES PRODUKT
METHODE DE PRODUCTION D'UN ALIMENT POUR ANIMAUX OU D'UN ALIMENT, ET PRODUIT AINSI OBTENU

(30) Priority: 21.12.2009 DE 102009059807
(43) Date of publication of application: 31.10.2012
(73) Proprietor: Mars, Incorporated, McLean, VA 22101-3383 (US)
(72) Inventor: SCHLEBUSCH, Johannes, P., 27321 Thedinghausen (DE)
(74) Representative: Scholz, Volker
(86) International application number: PCT/EP2010/007431
(87) International publication number: WO 2011/076341

(56) References cited:
- EP-A2- 1 358 802
- WO-A1-2008/006448
- US-A- 4 303 682
- US-A- 4 781 939
- US-A1- 2008 299 251
- US-B1- 6 613 372

## Description

The present invention relates to a method of producing an animal feed or foodstuff and a product obtained by that method.

In the animal feed and food industry, a problem which arises in a variety of ways is how to prepare products simply and efficiently which in particular have the appearance of natural or original pieces of meat or fish, but which are prepared from smaller meat and fish offcuts or meat or fish-like components, especially components which have only a small meat content but a high content of fat and other components.

In this connection, products are well-known which are prepared using meat or fish emulsions.

Meat emulsions have long been used on a large scale in the animal feed and food industry, especially in the field of pet food. In this context, there is a need to use the greatest possible proportion of meat raw materials, optionally in combination with vegetable proteins, since these are important nutrient sources for proteins, minerals, trace elements, fat and vitamins, while also being well-tolerated and highly digestible and at the same time very tasty, so that they provide an ideal base for an adequate supply of nutrients.

It is desirable in this connection to imitate in particular the texture and appearance of natural or original pieces of meat or fish, even though the animal feed or foodstuffs to be produced merely consist of smaller meat and fish offcuts, i.e. scraps, and other components of the animal which could not otherwise be used for human nutrition.

EP 2 037 754 A1, for example, discloses a method of producing an animal feed or foodstuff in which first and second streams of material are dispersed together in laminar fashion, then ejected through a nozzle and solidified. Laminar dispersion is understood here, as it also is in the present invention, as meaning mixing at least one first stream of material and at least one second stream of material, in the course of which one of the streams of material is distributed in the second as a phase in such a way that that phase can still be detected with the naked eye. It is believed that corresponding phase droplets with a diameter of < 0.1 mm can no longer be detected with the naked eye. If the droplet diameter is less than or equal to 0.1 mm, it is assumed that there has been a complete blending of the streams of material, i.e. it is not a laminar dispersion.

According to EP 2 037 754 A1, meat or fish emulsions can be used as the first stream of material, while a viscous gel can be used as the second stream of material. In this process, the viscous gel is prepared by initmately mixing the gel-forming components with water in a cutter.

In this case, however, it has transpired that the use of a viscous gel prepared in this way results in the introduction of gas bubbles both in the corresponding stream of material and in the end product, i.e. the animal feed or foodstuff. Viscous gels of this kind containing gas bubbles impair the authenticity of the meat or fish analogues prepared with them, however, because gas bubbles disturb the striped meat pattern (fibres) obtained if those gas bubbles are visible in pieces of meat or fish.

EP 1 358 802 A2 discloses an apparatus for the preparation of dough from ingredients intended for foodstuffs and a liquid, especially water. In that apparatus, the liquid is introduced via a nozzle unit under high pressure into the ingredients needed for the preparation of the dough.

The present invention is based on the problem of providing a method of producing animal feed or foodstuffs which overcomes the disadvantages of the state of the art. In particular, it is the intention to provide a method which prevents or at least reduces the introduction of gas bubbles in the production of meat or fish analogues so that the authenticity of such a meat or fish analogue is preserved. In addition, it is intended to provide an animal feed or foodstuff prepared according to the method.

The problem is solved in accordance with the invention by a method of producing an animal feed or foodstuff comprising the steps of:
(i) providing at least a first stream of material, preferably comprising a meat and/or fish emulsion,
(ii) preparing a viscous gel comprising at least one gel-forming component and a liquid, especially water, by introducing the gel-forming component and the liquid into a mixing chamber, the introduction of the liquid into the gel-forming component located in the mixing chamber being performed by means of a first nozzle unit under high pressure,
(iii) providing the viscous gel obtained in step (ii) as or in at least one second stream of material,
(iv) making a laminar dispersion of the second stream of material in the first stream of material in an apparatus for at least partially incompletely mixing the first and second streams of material, so that the second stream of material is distributed in the first stream of material in the form of droplets with a size of at least 0.3 mm, preferably 0.3 mm to 8 mm,
(v) withdrawing the first stream of material containing the second stream of material in the form of droplets through a second nozzle unit, and
(vi) solidifying the first stream of material containing the second stream of material in the form of droplets.

It is preferred that the gel-forming component is selected from hydrocolloids, aspic, gelatine, collagen, starch, cereals, broth and mixtures thereof, hydrocolloids being preferred, with carboxymethyl cellulose, guar gum and galactomannane being particularly preferred. A particularly preferred gel-forming component that can be mentioned is carboxymethyl cellulose.

It is particularly preferred that the viscosity of the viscous gel is between 5,000 mPas and 500,000 mPas (10,000 mPas = 10,000 cP (centipoise)), measured with a Brookfield viscometer RVDVIII, spindle 7, 20 r.p.m., temperature 20° C.

In addition, it may preferably be contemplated that the introduction of the liquid is performed by means of the first nozzle unit under a pressure of 30 to 150 bar, preferably 30 to 50 bar, more preferably 30 to 40 bar.

It is also proposed that the first nozzle unit comprises a round nozzle or slotted nozzle which is preferably arranged in such a way that a jet of liquid passing through the nozzles extends across the width of the mixing chamber and/or is directed against an inner wall of the housing of the mixing chamber.

In addition, it is preferably proposed that before, during or after the solidification, the first stream of material containing the second stream of material is cut into pieces of a suitable size, preferably perpendicularly to the direction of withdrawal from the second nozzle unit.

In a further embodiment, it may be contemplated that the apparatus for at least partially incompletely mixing is a static mixer.

It is preferred that the first and second streams of material are used in a weight ratio of 50:50 to 95:5, preferably 70:30 to 90:10, more preferably 80:20 to 85:15.

It is particularly preferably contemplated that the first stream of material additionally comprises fibrous material, fibre-containing material, starch and/or cereal flour. The purpose of this additive is to increase the viscosity.

A further advantageous embodiment of the present invention comprises an additional step (iva), in which, after the laminar dispersion in step (iv), an additional second stream of material is introduced into the first stream of material obtained in step (iv) in an apparatus comprising a hollow shaft, into which the second additional stream of material is introduced at an input end thereof and is delivered to an exit end, the hollow shaft being substantially concentrically surrounded, at least at the exit end, by a tube via which the first stream of material obtained in step (iv) is transported to the exit end of the hollow shaft, and at the exit end of the hollow shaft, inside the tube, the second additional stream of material is introduced into the first stream of material obtained in step (iv) via a distribution means.

It is preferred in this connection that the additional second stream of material is introduced into the first stream of material obtained in step (iv) via an impeller wheel.

It can particularly preferably be contemplated that the second nozzle unit is a slotted nozzle.

It is also particularly preferred that fibres, preferably vegetable fibres, are added to the viscous gel before, during or after its preparation in step (ii).

Preferred fibres may, for example, be wheat and/or oat fibres, cellulose fibres or the like. It is also conceivable that these fibres may be used in the form of powders, such as cellulose powders, sugar beet chip powder or chicory chip powder, or in mixtures of such fibres and/or powders.

Adding fibres and/or powders does not have a negative influence on the production of the viscous gel; on the contrary, it is ensured that the appropriate viscosity of the gel is preserved.

The invention also relates to an animal feed or foodstuff which can be produced with a method described above.

It has surprisingly been found that with the method of the invention, a viscous gel can be prepared which is substantially free of gas bubbles. If that viscous gel is used as or in a second stream of material, animal feed or food analogues can be prepared whose authenticity is substantially not impaired. In particular, the striped pattern due to the fibre structure of meat and fish is not impaired. Thanks to the special method of producing the viscous gel, the inclusion of gas bubbles is largely avoided. Without wishing to be bound by a theory, it is believed that the introduction of the liquid into the gel-forming component leads to the hydration of that component in a low-viscosity stage (which is of limited duration), so that any gas bubbles that might still be present can escape from the gel with no difficulty.

This means that products can be produced in accordance with the invention which correspond in their texture and appearance to natural or original pieces of meat or fish.

In addition to the bubble-free preparation of the viscous gel as or in a second stream of material, it is likewise central to the invention that the droplets of the second stream of material are distributed in the first stream of material in a size from 0.3 mm to 8 mm, which can preferably be achieved by means of a laminar dispersion using a static mixer. Secondly, it is central that the stream of material obtained in this way with droplets dispersed therein is removed through a nozzle, preferably a slotted nozzle, so that the droplets of the second stream of material contained in the first stream of material are withdrawn lengthwise. The mixture removed from the nozzle can then harden, whereupon the material can be sliced, preferably perpendicularly to the direction of removal from the nozzle unit, in order to provide a texture of the product which is very similar to an original piece of meat or fish.

In a preferred embodiment of the invention, it is likewise possible to produce a fish-based animal feed or foodstuff which exhibits the typical coarse structure of fish fillet. For this purpose, after the laminar dispersion of the second stream of material in the first stream of material in step (iv), a further apparatus is used, in which an additional second stream of material in a coarser form is introduced into the first stream of material obtained in step (iv).

Details on this and on the general method can be found in EP 2 037 754.

The term "hydrocolloid" is to be understood in the context of the present invention as meaning a group of polysaccharides and proteins which form solutions in water as colloids and exhibit a high capacity for gel formation. Examples of hydrocolloids include starch flours, cellulose, pectins, gum arabic, galactomannans, agar, carrageenan, alginates, gelatine, caseinates, xanthan, dextrans and cellulose derivatives such as carboxymethyl cellulose (CMC), hydroxypropyl methyl cellulose (HPMC) and methyl cellulose (MC).

Further features and advantages of the method of the invention will become clear from the following detailed description of one embodiment of the invention.

### First stream of material

A first stream of material was prepared by mixing 11 % by weight pigs' stomachs, 43 % by weight chicken liver, 36 % by weight turkey (mechanically recovered meat), 6 % by weight animal or vegetable protein extracts and 4 % by weight vitamins, salts, minerals and fibres. The components were prepared by mincing and fine cutting to a final temperature of no more than 20° C.

### Second stream of material

The second stream of material consists of 2 % by weight carboxymethyl cellulose, optionally fibres, 2 % by weight salts, minerals, pigments, dyes, spices, broth and 95 % by weight water.

Instead of the exclusive use of carboxymethyl cellulose as the gel-forming component, other gel-forming components can also be used in addition to or in the place of carboxymethyl cellulose. It is, for example, conceivable to use a gel-forming component which contains up to 4 % by weight carboxymethyl cellulose, up to 20 % by weight cellulose fibre powder and/or up to 20 % by weight vegetable fibre powder.

The second stream of material, i.e. the viscous gel, was prepared in accordance with the method described in EP 1 358 802 A2. In particular, the water was introduced under a high pressure of 70 bar into the gel-forming component, which was already present in a mixing chamber. The viscous gel withdrawn from the mixing chamber did not contain any gas bubbles, but was highly viscous.

The first and second streams of material were then dispersed in laminar fashion with an apparatus as described in EP 2 037 754, specifically in proportions of 80 % by weight of the first stream of material and 20 % by weight of the second stream of material.

After solidification, the finished animal feed or foodstuff exhibits a typical meat graining of chicken meat at all the cut surfaces. Since there are substantially no gas bubbles enclosed in the product, the texture is extremely similar to natural chicken meat.

## Claims

1. A method of producing an animal feed or foodstuff comprising the steps of:
(i) providing at least a first stream of material, preferably comprising a meat and/or fish emulsion,
(ii) preparing a viscous gel comprising at least one gel-forming component and a liquid, especially water, by introducing the gel-forming component and the liquid into a mixing chamber, the introduction of the liquid into the gel-forming component located in the mixing chamber being performed by means of a first nozzle unit under high pressure,
(iii) providing the viscous gel obtained in step (ii) as or in at least one second stream of material,
(iv) making a laminar dispersion of the second stream of material in the first stream of material in an apparatus for at least partially incompletely mixing the first and second streams of material, so that the second stream of material is distributed in the first stream of material in the form of droplets with a size of at least 0.3 mm, preferably 0.3 mm to 8 mm,
(v) withdrawing the first stream of material containing the second stream of material in the form of droplets through a second nozzle unit, and
(vi) solidifying the first stream of material containing the second stream of material in the form of droplets.

2. The method as claimed in claim 1, **characterised in that** the gel-forming component is selected from hydrocolloids, aspic, gelatine, collagen, starch, cereals, broth and mixtures thereof, hydrocolloids being preferred, with carboxymethyl cellulose, guar gum and galactomannan being particularly preferred.

3. The method as claimed in either of claims 1 or 2, **characterised in that** the viscosity of the viscous gel is between 5,000 mPas and 500,000 mPas, measured with a Brookfield viscometer RVDVIII, spindle 7, 20 r.p.m., temperature 20° C.

4. The method as claimed in any of the preceding claims, **characterised in that** the liquid is introduced by means of the first nozzle unit at a pressure of 30 to 150 bar.

5. The method as claimed in any of the preceding claims, **characterised in that** the first nozzle unit comprises a round nozzle or slotted nozzle which is preferably arranged in such a way that a jet of liquid passing through the nozzles extends across the width of the mixing chamber and/or is directed against an inner wall of the housing of the mixing chamber.

6. The method as claimed in any of the preceding claims, **characterised in that** the first and second streams of material are used in a weight ratio of 50:50 to 95:5, preferably 70:30 to 90:10, more preferably 80:20 to 85:15.

7. The method as claimed in any of the preceding claims, **characterised in that** the first stream of material comprises additional fibrous material, fibre-containing material, starch and/or cereal flour.

8. The method as claimed in any of the preceding claims, comprising an additional step (iva), in which, after the laminar dispersion in step (iv), an additional second stream of material is introduced into the first stream of material obtained in step (iv) in an apparatus comprising a hollow shaft, into which the second additional stream of material is introduced at an input end thereof and is delivered to an exit end, the hollow shaft being substantially concentrically surrounded, at least at the exit end, by a tube via which the first stream of material obtained in step (iv) is transported to the exit end of the hollow shaft, and at the exit end of the hollow shaft, inside the tube, the second additional stream of material is introduced into the first stream of material obtained in step (iv) via a distribution means.

9. The method as claimed in any of the preceding claims, **characterised in that** fibres, preferably vegetable fibres, are added to the viscous gel before, during or after its preparation in step (ii).

10. An animal feed or foodstuff which can be prepared with a method as claimed in any of the preceding claims.

## Patentansprüche

1. Verfahren zur Herstellung eines Futter- oder Lebensmittels, welches die Schritte umfasst:
(i) Bereitstellen zumindest eines ersten Materialstroms, bevorzugt umfassend eine Fleisch- und/oder Fischemulsion,
(ii) Herstellen eines viskosen Gels umfassend zumindest eine gelbildende Komponente und eine Flüssigkeit, insbesondere Wasser, durch Eintragen der gelbildenden Komponente und der Flüssigkeit in eine Mischkammer, wobei das Einbringen der Flüssigkeit mittels einer ersten Düseneinheit unter Hochdruck in die in der Mischkammer befindliche gelbildende Komponente erfolgt,
(iii) Bereitstellen des in Schritt (ii) erhaltenen viskosen Gels als bzw. in zumindest einem zweiten Materialstrom,
(iv) laminares Dispergieren des zweiten Materialstroms im ersten Materialstrom in einer Vorrichtung zur zumindest teilweise unvollständigen Vermischung der ersten und zweiten Materialströme, so dass sich der zweite Materialstrom in Form von Tröpfchen in einer Größe von mindestens 0,3 mm, bevorzugt 0,3 mm bis 8 mm, im ersten Materialstrom verteilt,
(v) Austragen des den zweiten Materialstrom in Form von Tröpfchen enthaltenden ersten Materialstroms durch eine zweite Düseneinheit, und
(vi) Verfestigen des den zweiten Materialstrom in Form von Tröpfchen enthaltenden ersten Materialstroms.

2. Verfahren nach Anspruch 1, **dadurch gekennzeichnet, dass** die gelbildende Komponente ausgewählt wird aus Hydrokolloiden, Aspik, Gelatine, Kollagen, Stärke, Cerealien, Bouillon und Mischungen derselben, wobei Hydrokolloide bevorzugt sind, besonders bevorzugt Carboxymethylcellulose, Guargummi und Galactomannane.

3. Verfahren nach Anspruch 1 oder 2, **dadurch gekennzeichnet, dass** die Viskosität des viskosen Gels zwischen 5.000 mPas, und 500.000 mPas, liegt, gemessen mit einem Brookfield Viskosimeter RVDVIII, Spindel 7, 20 UPM, Temperatur 20°C.

4. Verfahren nach einem der vorangehenden Ansprüche, **dadurch gekennzeichnet, dass** die Einbringung der Flüssigkeit mittels der ersten Düseneinheit unter einem Druck von 30 bis 150 bar erfolgt.

5. Verfahren nach einem der vorangehenden Ansprüche, **dadurch gekennzeichnet, dass** die erste Düseneinheit eine Runddüse oder Schlitzdüse umfasst, die bevorzugt so angeordnet ist, dass ein durch die Düsen tretender Flüssigkeitsstrahl sich über die Breite der Mischkammer erstreckt und/oder auf eine Gehäuseinnenwand der Mischkammer gerichtet ist.

6. Verfahren nach einem der vorangehenden Ansprüche, **dadurch gekennzeichnet, dass** der erste und der zweite Materialstrom in einem Gewichtsverhältnis von 50:50 bis 95:5, bevorzugt 70:30 bis 90:10, bevorzugter 80:20 bis 85:15, eingesetzt werden.

7. Verfahren nach einem der vorangehenden Ansprüche, **dadurch gekennzeichnet, dass** der erste Materialstrom zusätzlich faserartiges Material, faserhaltiges Material, Stärke und/oder Getreidemehl umfasst.

8. Verfahren nach einem der vorangehenden Ansprüche, umfassend einen zusätzlichen Schritt (iva), wobei nach dem laminaren Dispergieren in Schritt (iv) ein zusätzlicher zweiter Materialstrom in den in Schritt (iv) erhaltenen ersten Materialstrom in einer Vorrichtung eingebracht wird umfassend eine Hohlwelle, in die der zweite zusätzliche Materialstrom an einem Zugabeende derselben eingeführt und zu einem Austrittsende geführt wird, wobei die Hohlwelle zumindest am Austrittsende von einem Rohr im wesentlichen konzentrisch umgeben ist, über das der in Schritt (iv) erhaltene erste Materialstrom zum Austrittsende der Hohlwelle geführt wird, wobei am Austrittsende der Hohlwelle innerhalb des Rohres über eine Verteilungsvorrichtung der zweite zusätzliche Materialstrom in den in Schritt (iv) erhaltenen ersten Materialstrom eingebracht wird.

9. Verfahren nach einem der vorangehenden Ansprüche, **dadurch gekennzeichnet, dass** dem viskosen Gel vor, während oder nach dessen Herstellung in Schritt (ii) Fasern, bevorzugt Pflanzenfasern zugemischt werden.

10. Futter- oder Lebensmittel, herstellbar mit einem Verfahren nach einem der vorangehenden Ansprüche.

## Revendications

1. Procédé de production d'un aliment pour animaux ou d'une denrée alimentaire, comprenant les étapes qui consistent à :
(i) mettre à disposition au moins un premier flux de matière, comprenant de préférence une émulsion de viande et/ou de poisson,
(ii) préparer un gel visqueux comprenant au moins un composant formant un gel et un liquide, particulièrement de l'eau, en introduisant le composant formant un gel et le liquide dans une chambre de mélange, l'introduction du liquide dans le composant formant un gel situé dans la chambre de mélange étant réalisée au moyen d'une première unité de buse sous haute pression,
(iii) mettre à disposition le gel visqueux obtenu à l'étape (ii) en tant que ou dans au moins un deuxième flux de matière,
(iv) procéder à une dispersion laminaire du deuxième flux de matière dans le premier flux de matière dans un appareil pour au moins partiellement et incomplètement mélanger le premier et le deuxième flux de matière, de sorte que le deuxième flux de matière soit distribué dans le premier flux de matière sous la forme de gouttelettes ayant une taille d'au moins 0,3 mm, de préférence 0,3 mm à 8 mm,
(v) retirer le premier flux de matière contenant le deuxième flux de matière sous la forme de gouttelettes par l'intermédiaire d'une deuxième unité de buse, et
(vi) solidifier le premier flux de matière contenant le deuxième flux de matière sous la forme de gouttelettes.

2. Procédé selon la revendication 1, **caractérisé en ce que** le composant formant un gel est sélectionné parmi des hydrocolloïdes, l'aspic, la gélatine, le collagène, l'amidon, des céréales, un bouillon et des mélanges de ceux-ci, les hydrocolloïdes étant préférés, la carboxyméthylcellulose, la gomme de guar et le galactomannane étant particulièrement préférés.

3. Procédé selon l'une quelconque des revendications 1 ou 2, **caractérisé en ce que** la viscosité du gel visqueux est comprise entre 5 000 mPas et 500 000 mPas, mesurée avec un viscosimètre Brookfield RVDVIII, mobile 7,20 tr/min, température 20° C.

4. Procédé selon l'une quelconque des revendications précédentes, **caractérisé en ce que** le liquide est introduit au moyen de la première unité de buse à une pression de 30 à 150 bar.

5. Procédé selon l'une quelconque des revendications précédentes, **caractérisé en ce que** la première unité de buse comprend une buse ronde ou une buse fendue qui est de préférence disposée de telle manière qu'un jet de liquide passant dans les buses s'étende sur toute la largeur de la chambre de mélange et/ou soit dirigé contre une paroi interne de l'enceinte de la chambre de mélange.

6. Procédé selon l'une quelconque des revendications précédentes, **caractérisé en ce que** le premier et le deuxième flux de matière sont utilisés selon un rapport en poids de 50:50 à 95:5, de préférence 70:30 à 30:10, de manière davantage préférée 80:20 à 85:15.

7. Procédé selon l'une quelconque des revendications précédentes, **caractérisé en ce que** le premier flux de matière comprend une matière fibreuse supplémentaire, une matière contenant des fibres, de l'amidon et/ou une farine céréalière.

8. Procédé selon l'une quelconque des revendications précédentes, comprenant une étape supplémentaire (iva) dans laquelle, après la dispersion laminaire à l'étape (iv), un deuxième flux de matière supplémentaire est introduit dans le premier flux de matière obtenu à l'étape (iv) dans un appareil comprenant une tige creuse, dans laquelle le deuxième flux de matière supplémentaire est introduit au niveau d'une extrémité d'entrée de celle-ci puis est distribué vers une extrémité de sortie, la tige creuse étant entourée essentiellement de manière concentrique, au moins au niveau de l'extrémité de sortie, par un tube par lequel le premier flux de matière obtenu à l'étape (iv) est transporté vers l'extrémité de sortie de la tige creuse et, à l'extrémité de sortie de la tige creuse, à l'intérieur du tube, le deuxième flux de matière supplémentaire est introduit dans le premier flux de matière obtenu à l'étape (iv) via un moyen de distribution.

9. Procédé selon l'une quelconque des revendications précédentes, **caractérisé en ce que** des fibres, de préférence des fibres végétales, sont ajoutées au gel visqueux avant, pendant ou après sa préparation à l'étape (ii).

10. Aliment pour animaux ou denrée alimentaire qui peut être préparé(e) par un procédé selon l'une quelconque des revendications précédentes.
